# EUROPEAN PATENT SPECIFICATION

(11) **EP 3 577 386 B1**
(45) Date of publication and mention of the grant of the patent: **16.08.2023**
(21) Application number: 18704186.8
(22) Date of filing: 31.01.2018
(51) Int. Cl.: F17C 1/16

(54) **HIGH PRESSURE SEALING**
HOCHDRUCKVERSIEGELUNG
APPAREIL DE SCELLAGE À HAUTE PRESSION

(30) Priority: 31.01.2017 EP 17305107
(43) Date of publication of application: 11.12.2019
(73) Proprietor: PLASTIC OMNIUM NEW ENERGIES FRANCE, 69007 Lyon (FR)
(72) Inventor: DEPARIS, Eric, 92300 Levallois-Perret (FR); CRIEL, Bjorn, 1750 Sint-Martens-Lennik (BE); BULOTA, Mindaugas, 1130 Bruxelles (BE)
(74) Representative: LLR
(86) International application number: PCT/EP2018/052449
(87) International publication number: WO 2018/141820

(56) References cited:
- JP-A- 2015 031 307
- US-A- 5 429 845
- US-A1- 2015 338 024

## Description

### Field of the invention

The present invention relates to pressure vessels. In particular, the invention relates to an assembly for a pressure vessel and to a method for manufacturing said assembly. More particularly, it relates to an assembly comprising a boss, a seal element, a compressive element and a thermoplastic liner.

### Background

Some vehicles use compressed gas as fuel, in particular hydrogen. Generally, such vehicles are equipped with a composite pressure vessel. Generally, the composite pressure vessel comprises a liner for the storage of hydrogen. For example, an outer filament winding is applied around the liner. The filament winding can come in the form of a carbon fiber filament composite wound around the outside of the liner. Generally the liner is equipped with a boss at an end of the liner. It is understood by boss, a part, generally made of metal, which serves to receive fittings such as valves.

It is desirable to have a leak tight contact between the liner and the boss in order to meet permeability standards and environmental requirements.

It is known various methods for manufacturing a pressure vessel with low permeability at the interface between the liner and the boss. US 7,556,171 discloses a pressure vessel comprising a liner and a boss. The liner is manufactured by injection molding. The liner comprises an entry port having a backup ring divided into two halves. The boss comprises a seal. The boss is press fitted onto the liner and positioned such that the seal is compressed by a backup ring.

Furthermore, JP 2015 031 307 discloses a method for manufacturing an assembly comprising a thermoplastic liner, a boss, a seal element and a compressing element. US 2015/338024 A1 discloses a nozzle for a plastic container and a plastic container for pressurized gases.

There is a constant objective to ensure tightness at the interface between the boss and the liner. The object of the present invention is to provide a solution which guarantees a tight boss liner interface.

### Summary

It is a first object of the invention to provide an assembly comprising a liner a boss; a seal element and a compressing element, a method for manufacturing said assembly comprising a thermoplastic liner, a boss, a seal element and a compressing element and a pressure vessel comprising said assembly which allow ensuring tightness at the interface between the boss and the liner.

The invention is set out in the appended set of claims.

According to a first aspect there is provided an unclaimed method for manufacturing an assembly comprising a thermoplastic liner a boss, a seal element and a compressing element, wherein the method comprises at least the steps of:
1) Forming a boss subassembly by positioning the seal element onto the boss and by securing the compressing element around said seal element, such that the seal element is compressed onto the boss (S01), said compressing element being at least partially made of a thermoplastic material which is chemically compatible with the thermoplastic liner;
2) Placing the boss subassembly in a mold for molding the thermoplastic liner (S02);
3) Molding the thermoplastic liner and attaching the boss subassembly to the thermoplastic liner during said molding, wherein the compressing element is at least partially welded to the thermoplastic liner during said molding (S03).

It is hereby defined by S01, S02 and S03, the step 1, 2 and 3 of the method.

The idea of the present invention is to provide a double stage sealing. A first sealing stage is provided between the boss, the seal element and the compressing element at the end of the step of forming the boss subassembly (SO1), and a second sealing stage is provided between the compressing element and the liner at the end of the molding step (SO3). The first sealing stage is obtained by the compression of a seal element between the boss and the compressing element. The second sealing stage is obtained by a welding of the thermoplastic liner and the compressive element. Moreover, a tight seal between the boss and the compressing element is obtained once the molding of the liner and shrinkage of said liner has occurred such that the contact between the compressing element and the boss is even tighter
More precisely, the first sealing stage is obtained by compressing one or several seal(s) onto the boss by means of one or several compressing element(s). The compressing operation of said seal element(s) is performed before the manufacturing of the liner. In a preferred embodiment, the seal element is an O-ring, said O-ring is made of a material able to withstand compression constraints without involving plastic deformation, such as an elastomer.

In a first particular unclaimed embodiment, the compressing element has a tubular shape. In this first particular embodiment, the step of forming the boss subassembly (SO1) comprises: positioning the seal element onto the boss, preferably by fitting an O-ring onto the boss, and securing the compressing element around said seal element by sliding the compressing element having a tubular shaped around the boss, such that the compressing element having a tubular shape comes around the O-ring. The dimensions of the compressing element having a tubular shape are such that when it is placed around the seal element, said seal element is compressed. To achieve an optimal compression, it has to be understood that the inner diameter of compressing element having a tubular shape is substantially equal to the outer diameter of the boss portion receiving at least one seal element. It is understood by substantially equal, that the mechanical tolerance facilitates the fitting of the compressing element onto the boss.

In a second and claimed embodiment, the compressing element still has a tubular shape, but the seal element and the compressing element are placed inside the boss instead of outside. In this embodiment, the step of forming the boss subassembly (SO1) comprises: positioning the seal element inside the boss, preferably by fitting an O-ring into the opening of the boss, and securing the compressing element into said seal element by sliding the compressing element having a tubular shape into the boss, such that the compressing element having a tubular shape comes inside the O-ring. The dimensions of the compressing element having a tubular shape are such that when it is placed inside the seal element, said seal element is compressed towards the inner face of the boss. To achieve an optimal compression, it has to be understood that the outer diameter of compressing element having a tubular shape is substantially equal to the inner diameter of the boss portion receiving at least one seal element. By "substantially equal" is meant that the mechanical tolerance facilitates the fitting of the compressing element into the boss.

In a third particular embodiment, the compressing element is a clamp element. In this first particular embodiment, the step of forming the boss subassembly (SO1) comprises: positioning the seal element onto the boss by engaging the clamp element and securing the compressing element around said seal element by closing the clamp element onto the seal element by pulling tight the strip through the head of the clamp leading to a diameter reduction of the clamp element provoking the compression of the seal element. In a particular embodiment, the clamp element is a plastic clamp comprising a series of internal mouths regularly spaced along the strip. The space between the internal mouths allows flexibility of the plastic clamp for its diameter reduction during closing. Said diameter reduction of the clamp element provokes the compression of the seal element.

After the step of molding the thermoplastic liner and attaching the boss subassembly to the thermoplastic liner during said molding (SO3), a tight seal between the boss and the compressing element is obtained once the molding of the liner and shrinkage of said liner has occurred such that the contact between the compressing element and the boss is even tighter. The mechanical tolerances related to the fitting of the compressive element onto the boss have to be adapted such that the person skilled in the art is able to perform the leak test conform to the regulation EU406/2010, relative to the hydrogen-powered motor vehicles, with positive results. Therefore the compressing element is placed in a tight manner with low mechanical tolerances onto the boss portion receiving at least one seal element. The compressed seal element guarantees the sealing between the boss and the compressing element.

More precisely, the welding interface between the compressing element(s) and the liner induces a second sealing stage, at the end of the molding step. Therefore the creation of the welding interface is performed during the molding of the liner. Advantageously, the compressing element(s) is made of a material which is compatible with the material of the liner. In other words, the material of the compressing element (s) can be bonded in a leak tight manner with the material of the liner. Said welding interface is formed by the introduction of the molten thermoplastic forming the liner into the mold heating the thermoplastic material of the compressing element. Said heated thermoplastic compressing element outer surface is brought into a molten state. During the molding phase, the molten thermoplastic forming the liner is compressed onto the molten thermoplastic of the compressing element. Said compression of the two thermoplastics having a chemical affinity in a molten phase provokes the realization of a plastic bonding by autohesion. Once the welding interface is performed, a leak tight interface is obtained between the compressing element and the liner.

Once said liner made of molten thermoplastic has solidified, a shrinkage phenomenon occurs. Said shrinkage induces a compression force onto the compressing element. Therefore the compression force is transferred by the compressing element onto the seal element, which guarantees an even tighter interface between the boss and the compressing element.

Therefore the method comprises a double stage sealing improving the tightness of the interface between the boss and the liner. In addition, said method provides a more controlled compression of the seal element, involving the solidification of the liner as an additional compressing force.

The method for obtaining an assembly comprising a boss, a sealing element, a compressing element and a liner according to the invention can be quickly manufactured as the positioning and attachment of the boss to the liner are obtained during the liner formation.

The term "liner" refers to a hollow body storing a gaseous medium in a leak tight manner. In a preferred embodiment, the gaseous medium is hydrogen. In an even preferred embodiment, said liner is made of a thermoplastic material having a low permeation relative to the hydrogen.

The term "boss" refers to a receiving means of at least one fitting. In a particular embodiment, the boss is made of a metallic material, and in a preferred embodiment said boss is made of aluminium.

In a preferred embodiment, the boss includes at least one dedicated portion provided to receive a seal element. Said at least one dedicated portion is defined by an area where the liner is overmolded onto the boss. Said dedicated portion hosts at least one groove. The at least one groove is extending inwardly in a radial direction relative to the outer surface of the boss. Said at least one groove is placed preferably on a cylindrical portion of the boss hosting a valve.

The seal element is defined in the invention by an element providing a tight contact between the boss and the compressing element. Said tight contact avoids the leak of gas between the boss and the compressing element.

In a preferred embodiment, said seal element is fitted in a groove placed on the dedicated portion of the boss for receiving the seal element. In a particular embodiment, said sealing element is able to withstand compressions without plastic deformation occurring. In an even more particular embodiment said seal element is made of elastomer. In a particular embodiment the seal element is an O-ring.

A compressing element is defined in the invention as a compressing means being placed around the seal element in a secured manner. Said placement in a secured manner is understood by a compressing element fitted by mechanical means onto the portion of the boss hosting a seal element and compressing said seal element. Said mechanical fitting induces a compression of the seal element. Preferably, the compressing element is a one-piece compressing element. By the expression "one piece compressing element", we intend to mean that the compressing element is monobloc and not the result of an assembly of several pieces obtained during the method for manufacturing an assembly according to the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

It is also to be noticed that the expression "assembly comprising a boss, a seal element, a compressive element and a thermoplastic liner", should not be interpreted as being restricted to an assembly comprising one boss, one seal element, one compressive element and one thermoplastic liner; it does not exclude that the assembly comprises at least one boss, at least one seal element, at least one compressing element and at least one thermoplastic line.

In a preferred embodiment, the compressing element has higher stiffness than the material used for the sealed element.

In a particular embodiment, said compressing element has tubular shape in order to enable a fitting onto the cylindrical portion of the boss hosting a seal element.

In a particular embodiment, the diameter of the inner side of the compressing element having a tubular shape is substantially equal to the outer diameter of the cylindrical portion of the boss comprising a groove. As previously mentioned, it is understood by substantially equal, that the mechanical tolerance facilitates the fitting of the compressing element onto the boss and guarantees a tight seal between the boss and the compressing element once the molding of the liner and shrinkage of said liner has occurred such that the contact between the compressing element and the boss is even tighter. Said mechanical tolerances related to the fitting have to be adapted such that the person skilled in the art is able to perform the leak test conform to the regulation EU406/2010 relative to the hydrogen-powered motor vehicles.

In a preferred embodiment, the compressing element comprises an outer surface made of thermoplastic. In a particular embodiment, the compressing element is integrally made of thermoplastic. In another particular embodiment, the compressing element comprises an inner and an outer surface made of different materials. In a particular embodiment said outer surface will be made of a blend of thermoplastics.

"Securing one compressing element around said at least one seal element" is understood as the compressing element being maintained in a tight manner at least partially around the seal element. In a particular embodiment the compressing element is maintained in a tight manner on the whole periphery of the seal element.

Said compressing element maintained in a tight manner results in a compression of the seal element. Thus, the seal element is maintained in a compressed form. Said compressed form implies that the width of the seal element is restricted to the depth of the groove onto the boss.

In a particular embodiment, the surface of the boss element receiving the compressing element comprises a shoulder such that the compressing element is secured once slid and pressed onto the boss in order to limit the movement of said compressing element in translation.

The boss subassembly is defined by the boss, at least one seal element and at least one compressing element. Said seal element and said compressing element are mechanically interlocked onto the boss. Said subassembly is placed into a mold prior to the liner molding.

It is here understood by "placing" that at least one subassembly is located inside the mold during the molding phase in order to obtain an assembly comprising a thermoplastic liner and at least one boss attached to said liner. In a preferred embodiment, said boss subassembly is placed on an open end of the liner.

"Chemical compatible" is here defined by two chemical species able to be welded.

In a particular embodiment, the welding of two thermoplastic species is understood as two molten thermoplastic pressed together where an autohesion phenomenon occurs. Such autohesion is the phenomenon describing the intermolecular diffusion and chain entanglement across a thermoplastic polymer interface forming a strong bond. Unlike adhesion, which relies on surface energetics or secondary chemical bonds between two materials either similar or dissimilar, autohesion relies on chain entanglements and secondary bonds for polymer chains of similar materials. Under ideal conditions, the diffusion is complete when the interface is no longer discernible from the bulk.

Once thermoplastic polymer-to-thermoplastic polymer contact is achieved at the interface, intermolecular diffusion and entanglement is needed to complete the process and to form a good weld.

The thermoplastic material of the liner can be made of, for example, polyolefins, in particular high-density polyethylene (HDPE), thermoplastic polyesters, polyketones, polyamides or copolymers. Preferably, this liner will be made of polyethylene (PE), polyamide (PA) or a mix of polyamide and polyphtalamide (PPA), called a "blend PA/PPA".

Furthermore, this material may be reinforced by fibers, such as carbon fibers, glass fibers, aramid impregnated in a matrix of thermoplastics like polycarbonates (PC), or a range of matrix materials such as polyetherimide (PEI), polyether ether ketone (PEEK), polyethersulphone (PES) and polyphenylene sulfide (PPS) used in combination with carbon fibers.

"One boss attached to the liner" is here defined by a boss and a liner joined in a chemically or mechanically manner. In a particular embodiment, either chemical or mechanical surface treatment is applied on the metallic boss in order to improve the direct contact between the boss and the liner. In an even more particular embodiment the surface of the boss in contact with the liner is treated by chemical etching, by laser engraving, by plasma or using adhesives in order to improve the bonding through mechanical interlocking, chemical affinity or chemical bonding. Said chemical etching or laser engraving provides micro-voids on the treated surface, preferably metal plastic bonding between a metal boss and a thermoplastic liner. Said micro-voids are filled with a molten thermoplastic during the moulding step. Once said thermoplastic has solidified, said liner and boss are joined by mechanical interlocking. The plasma treatment, on the other hand, enables chemical affinity between the liner and said boss.

In a preferred embodiment, the step of molding (S03) comprises preferably a plastic blow molding step or an injection molding step. The molding step (S03) to obtain the liner can involve any other molding methods where the boss subassembly can be introduced in a mold and being attached to the liner during the molding phase, for example overmolding or rotomolding. During said molding step, the molten thermoplastic forming the liner flows around at least one portion of the boss onto which is positioned at least one seal element and at least one compressing element. In said molding process, it is required that the flowing thermoplastic forming the liner is pressed onto the preheated thermoplastic outer surface of the compressing element to realise a weld. Said preheat of the outer surface of the compressing element can be realized at different moments, such as prior transferring the boss subassembly to the mold, during the transfer of said assembly to the mold or just prior closing the mold in order to realize the liner molding. It is advantageous to realize such preheat during the transfer or prior to the closing of the mold as less energy will be required to maintain the external surface at a certain level of temperature in order to be in a semi solid state.

In a more preferred embodiment, said preheat is realized just prior to mold closure, this way, no heat source will be required around the boss subassembly while being transferred to the mold. And once positioned into the mold the boss subassembly can be locally preheated to bring the outer surface of the compressing element made of thermoplastic to a sufficient temperature such that the welding with the liner can occur.

In an alternative embodiment, the outer surface of the compressing element comprises at least one fin. The at least one fin in contact with the molten liner made of thermoplastic will easily meld and generate a weld between the compressing element and the liner. Therefor no more preheat of the compressing element is required. The melting of at least one fin with the thermoplastic forming the liner guarantees a leak tight interface between the compressing element and the liner.

In a preferential embodiment, said at least one fin extends outwardly in a radial direction for 2.0mm with a width of 0.5 mm.

In a preferred embodiment, the seal element is an elastomer seal element. The seal element is preferably made of a soft plastic which can undergo deformation in compression without involving plastic deformation. Thus, the seal element reacts to the radial compression by extending in an axial direction without involving a permanent plastic deformation of said seal element. (It is hereby understood that the radial direction refers to the orientation of the groove. The axial direction hereby refers to the direction relative to the width of said groove.) Therefore, an elastomer is a preferential material to use in order to guarantee a tight contact between the seal element and another element having no chemical compatibility with the seal element such as the boss and the compressing element.

In a particular embodiment, the seal element has a ring shape in order to fit in the groove located on the boss. In an even more particular embodiment, said seal element having the shape of a ring has an oval cross section.

In an exemplary embodiment, the boss comprises two seal elements compressed by a compressing element.

In a particular embodiment, at least two seal elements are required to avoid a pressure leakage and reduce gas permeation, and in a particular embodiment hydrogen permeation.

In a particular embodiment, said seal element placed the most inwardly relative to the boss is used to avoid a pressure leakage. Said seal element acting as a pressure leakage barrier is preferably made of nitrile rubber.

In another particular embodiment, said seal element placed the most outwardly relative to the boss is used to reduce fluid permeability. Said seal element is preferably made of butyl rubber.

Two seal elements might be compressed by a compressing element following different configurations:
- In a first embodiment, two compressing elements, respective to the different seal element, are similar. It is hereby understood by compressing elements being similar, that they are made of the same material, having the same stiffness and the same shape. Therefore, it can be understood by similar that the compressing elements are identical. The compression force caused by the compressing elements applied onto each seal element is identical, regardless of the material used for said seal elements.
- In a second embodiment, two compressing elements, respective to the different seal elements, may have a different material and/or stiffness. It is considered that the compressing element used for each seal element as described in the first embodiment have a different stiffness or material. Thus, the compression forces applied by the at least two compressing elements of different nature are different. For a particular embodiment, said difference of compression forces might be required for the functions relative to the pressure leakage and gas permeability. In a particular embodiment, said different compression forces can result in the same width compression of the seals elements depending on their nature.
- In a third embodiment, the compressing element compresses at least two seal elements. A compressing element placed around at least two seal elements at once exercising the same compression. It is advantageous to use a compressing element covering at least two seal elements. The compressing element is extended in the axial direction. Said compressing element provides a better fitting onto the substantially cylindrical portion of the boss with improved mechanical tolerances. The displacement due to mechanical tolerances between the compressing element considered as a bore and at least one boss portion, where the least two seal elements are placed, considered as a shaft, are reduced. Said compressing element can reduce positioning issues relative to vibrations or hazardous movements of tools or machinery during the fitting of said compressing element. Said compressing element guarantees a better contact surface with the at least two seal elements and therefore a better constraints application.
In a particular embodiment, said compressing element can be placed around at least two seal elements requiring different compression forces. To solve this matter, it is proposed to provide a compressing element having a diameter slightly smaller at the location of the seal element requiring a higher compression force to be applied. For example, if we consider a compressing element covering two seal elements, said compression element has a conical tubular shape. Such conical tubular shape allows to compress more the seal element placed at the emplacement of the diameter reduction than the other seal element placed at the other extremity of the compressing element.

Said compressing element can be fitted in diverse manner onto the substantially cylindrical portion of a boss using diverse manner known by the person skilled in the art. For example in an embodiment, the compressing element is fitted manually, press fitted or fitted by any other mechanical means. The compressing element has to be fitted onto the seal element and the boss in a tight manner.

In a preferred embodiment, the compressing element comprises a thermoplastic outer surface. In said invention, it is proposed to weld the compressing element with the liner. Said liner being made of thermoplastic, it is required that said outer surface of the compressing element is made of a material chemically compatible with thermoplastic. It is therefore preferential to use also a thermoplastic material as the outer surface of the compressing element to perform the welding with the liner. This material can be made of, for example, polyolefins, in particular high-density polyethylene (HDPE), thermoplastic polyesters, polyketones, polyamides or copolymers. It is also advantageous to reinforce this material with fibers to avoid deformation. Thus, this material may be reinforced by fibers, such as carbon fibers, glass fibers, aramid fibers impregnated in a matrix of thermoplastics like polycarbonates (PC), or a range of matrix materials such as polyetherimide (PEI), Polyether ether ketone (PEEK), polyethersulphone (PES) and polyphenylene sulfide (PPS) used in combination with carbon fibers.

To be able to realize said welding it is required to preheat said thermoplastic material. The preheat of said outer surface made of thermoplastic facilitates the realization of the welding as two thermoplastic in a molten state will be pressed one onto another. The thermoplastics of the compressing element and the liner being pressed together in molten phase, into the mold, an autohesion phenomenon occurs. Said phenomenon provides the welding between the two said thermoplastic materials.

In a particular embodiment, said outer surface has a substantially cylindrical shape. It is understood by having a substantially cylindrical shape, a compressing element being at least partially cylindrical. In a preferred embodiment said compressing element has a tubular shape, where the inner and outer surfaces of said compressing element are circular.

In a particular embodiment, said at least one compressing element comprises at least two different materials. The compressing element comprises an inner and an outer surface. Said inner surface can be made of a material different of the material used for said outer surface. Said outer surface of the compressing element is made of thermoplastic. Said inner surface can be made of a material having a higher stiffness than said outer surface. Such that said material of the inner surface provides a higher compression force to the seal element than the material of said outer surface. In the case where the at least two materials have no chemical compatibility a surface treatment can be provided to reduce the permeability between said inner and outer surfaces having materials without chemical compatibility.

In a preferred embodiment, the outer surface of the compressing element is entirely welded to the thermoplastic liner. The outer surface of the compressing element being integrally welded to the liner provides a welding on the whole periphery of the compressing element. Said welding on the whole periphery provides a leak tight interface between the liner and the compressing element. Said welding acts as said compressing element and said liner were forming a single element.

In a preferred embodiment, said seal element is compressed by at least 20% in a radial direction. The seal element is compressed firstly by the compressing element and then by the shrinkage of the liner providing two steps of compression. Said two steps of compression induce a force on the seal element in a radial direction. Said force results in compression of the seal element. Said compression of the seal element induces a width reduction of at least 20% of said seal element once compressed by said two steps of compression. Hereby, it is understand that the width refers to the radial direction. Said compression of the seal element on his width is compensated by an expansion on the height, therefore the seal expending on its height will result in a seal element covering the entire width of the groove. Therefore, said seal element is in a tight contact with each contours of the groove. Said tight contacts of the seal element with the contours of the groove provide a tight interface between the boss and the compressing element.

In a preferred embodiment, the thermoplastic outer surface of the compressing element is preheated and brought into a quasi-solid state. Said outer surface of the compressing element made of thermoplastic is preheated in order to facilitate the welding interface with the liner made of thermoplastic. Said preheat is at a temperature approximatively 10 degrees Celsius below the melting temperature of the thermoplastic on the outer surface of the compressing element. Thus, said thermoplastic is not completely in a molten phase but in a quasi-solid phase. It is considered that the additional heat energy to bring to said thermoplastic outer surface of the compressing element to a molten state will be provided by the molten thermoplastic forming the liner.

It is considered that quasi-solid or semi-solid refers in physics to an element that lies along the boundary between a solid and a liquid.

In a preferred embodiment, the compressing element material stiffness is higher than the stiffness of the thermoplastic liner. Said higher stiffness of the compressing element is desirable such that once the material forming the liner is put into contact with the compressing element, no excessive deformation of the compressing element occurs. Therefore it is desired neither to bend nor push semi-molten thermoplastic of the compressing element within the groove hosting the seal element, once the material forming the liner is pressed onto the compressing element.

The invention also provides a composite pressure vessel, comprising a thermoplastic liner, a boss, a seal element positioned into the boss and compressed into the boss, the pressure vessel further comprising a thermoplastic compressing element secured inside the seal element, the thermoplastic compressing element being at least partially welded to the thermoplastic liner.

In preferred embodiments, the vessel may have at least one of the following features:
the seal element is an elastomer seal element ;
the seal element is compressed by at least 20% in a radial direction ;
a value of stiffness of a material of the compressing element is higher than a value of stiffness of a material of the thermoplastic liner ;
the compressing element comprises at least two different materials ;
the thermoplastic compressing element comprises a thermoplastic outer surface ;
the outer surface of the compressing element comprises at least one fin ;
the outer surface consists in a portion opposite to a main axis of the boss and in a portion facing the main axis, the portion opposite to the main axis being entirely welded to said liner ;
the outer surface consists in a portion opposite to a main axis of the boss and in a portion facing the main axis, the portion facing the main axis being entirely welded to said liner ;
along an axis perpendicular to a main axis of the boss, are juxtaposed parts of the liner, of the compressing element, of the seal element and of the boss.

The assembly comprising the boss subassembly and liner can be manufactured including any of the preceding embodiments defining the process to create such assembly or the structure of said subassembly.

In a more general manner, the assembly comprising a boss subassembly and the thermoplastic liner can be used for the manufacturing of any pressured vessel.

In a preferred embodiment, said pressure vessel is weld free in the longitudinal direction during the molding step (S03). It is desired that the thermoplastic liner is weld free in the longitudinal direction during the liner molding, such that said pressure vessel can have the benefits of the shrinkage of the thermoplastic liner once cooled down. Said shrinkage of the thermoplastic liner guarantees a tighter sealing of the pressure vessel as the shrinkage induces a compression force performed by the solidified thermoplastic liner onto the compressing element.

### Brief description of the drawing

Fig. 1 is a sectional view illustrating the unclaimed method for manufacturing a boss subassembly and an assembly comprising said boss subassembly and a thermoplastic liner using injection molding.
Fig. 2 is a sectional view illustrating the method for manufacturing an assembly comprising a boss subassembly and a thermoplastic liner using blow molding.
Fig. 3 is a cross sectional view disclosing the compressing element.
Fig. 4 is a view of different compressing elements configurations for a boss tubular shaped portion hosting two seal elements.
Fig. 5 is a partial cross section view of a compressing element comprising a fin.
Fig. 6 is a cross section of a pressure vessel resulting from the method of figure 1.
Fig. 7 is a sectional view illustrating a second and claimed method for manufacturing a boss subassembly and an assembly comprising said boss subassembly and a thermoplastic liner using injection molding, resulting in a second embodiment.
Fig. 8 is a pressure vessel resulting from the method of figure 7.

### Detailed description of the drawing

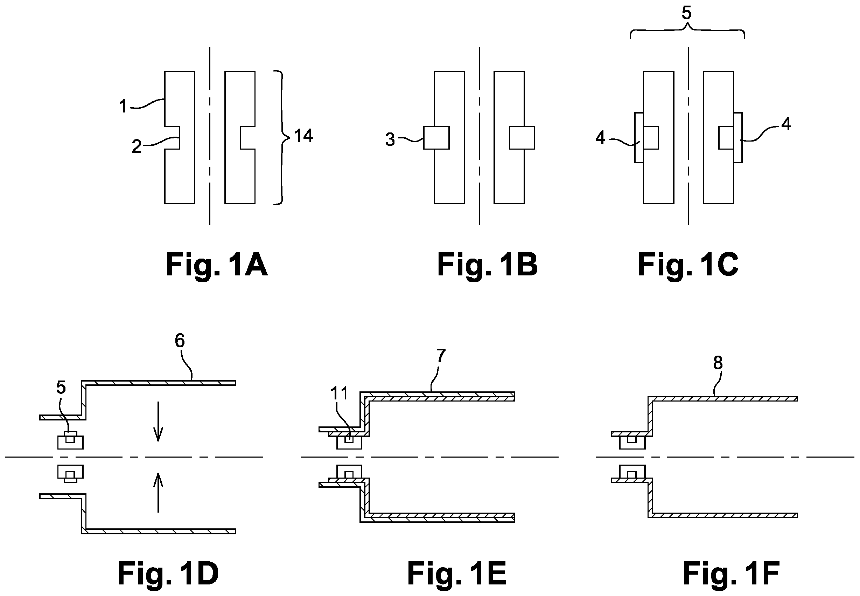

Fig. **1A** illustrates a boss **1.** In a particular unclaimed embodiment, the boss **1** comprises a tubular shaped portion **14** hosting a fitting. In a preferred embodiment, said fitting is a valve (not shown in the figure). Said tubular shaped portion **14** hosting a valve comprises at least one groove **2** extending outwardly in a radial direction. In a preferred embodiment, the boss **1** is made of a metallic material in order to withstand the high pressure. In a preferred embodiment, the metallic material used for the boss **1** is aluminum.

Fig. **1B** illustrates the boss comprising at least one groove, it is placed into said groove a seal element **3.** Said seal element has the form of a ring to be fitted into the groove. The material of the seal element **3** is preferably an elastomer. The elastomeric seal element **3** is preferably an O-ring which is commonly used as a seal element **3** in industrial use. Elastomeric O-ring seals have a broad range of service conditions that make the O-ring ideal for static and dynamic sealing functions. Its ability to seal on relatively rough surface finishes offers one of the economical solutions to sealing problems. Elastomeric O-rings are capable of undergoing large deformations under compression. Hence, grooves are often used to restrict said deformation, resulting in improved sealing capabilities. The seal element **3,** once fitted into the groove, has a width slightly larger the depth of the groove, such that the seal element **3** exceeds slightly from the groove **2** in a radial direction.

Fig. **1C** illustrates the fitting of a compressing element **4** placed onto the seal element in a tight manner. Such fitting is made by press fitting or manually. The compressing element **4** is positioned around the seal element in a tight manner such that the width of the seal element exceeding of the groove is compressed.

The diameter of the outer surface of the boss equals substantially the diameter of the inner surface of the compressing element **4,** with mechanical tolerances for said fitting as low as possible. The compressing element **4** may comprise one or more material such that the external surface is made of a thermoplastic material and the inner surface can be made of another material. The boss **1,** the seal element and the compressing element **4** form a boss subassembly **5.**

The Figs **1D** to **1F** illustrate a particular unclaimed embodiment where the assembly comprising a boss and a thermoplastic liner is obtained by injection molding.

Fig. **1D** illustrates the placement of the boss subassembly **5** into a mold **6** and the closing of said mold **6.** Once the boss subassembly **5** is placed, it is preferred to preheat the compressing element at least on its outer surface made of thermoplastic material to facilitate a subsequent welding.

Fig. **1E** illustrates the injection of the molten plastic forming the thermoplastic liner **7** in the mold **6** and the molding phase. During the injection phase, the molten thermoplastic forming the liner **7** is pressed against the mold internal surface giving the shape of the liner **7.** Said molten thermoplastic is also pressed onto preheated thermoplastic from the outer surface of the compressing element **4.** The preheated thermoplastic onto the surface is into a quasi-solid state. Said thermoplastic in the semi solid state being in contact with the molten thermoplastic forming the liner **7,** provokes a welding of the two thermoplastic materials. In a preferred manner the outer surface of the compressing element is integrally welded to the liner **7.** The thermoplastic materials present in the mold are cooled off so that said thermoplastics solidify. The boss subassembly is positioned into one open 11 end of the thermoplastic liner, once said thermoplastic liner is formed.

Fig. **1F** illustrates a manufactured assembly **8** comprising a boss and a liner obtained by injection molding. Once the thermoplastic material forming the liner has solidified, the mold **6** is open and the assembly **8** comprising a thermoplastic liner **7** and the boss subassembly is manufactured.

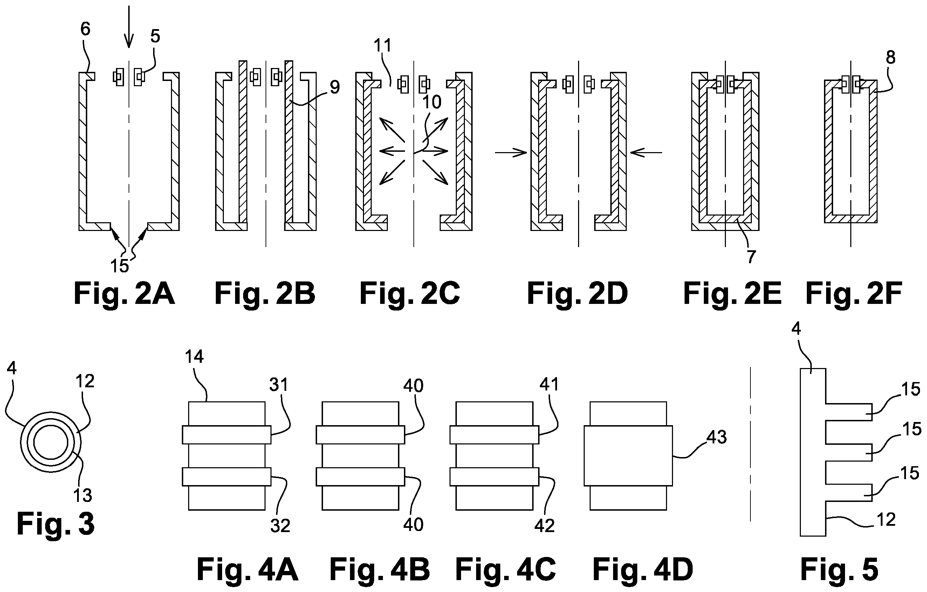

The Figs **2A** to **2F** illustrate another particular unclaimed embodiment where the assembly comprising a boss and a thermoplastic liner is obtained by blow molding.

Fig. **2A** illustrates the introduction of the boss subassembly **5** into the mold **6** for blow molding. Said boss subassembly **5,** shown in Fig **1C****,** is positioned between the two shell halves **15** forming said mold. Said positioning is made to attach said boss subassembly **5** to one of the open end of the thermoplastic liner, once said liner is formed. After being positioned, said boss subassembly is preheated on the outer surface of the compressing element. Said preheated outer surface is made of thermoplastic and brought to a semi solid state.

Fig. **2B** illustrates the molten thermoplastic forming the thermoplastic liner flowing into said mold. Said molten thermoplastic forms two parisons **9.**

Fig. **2C** illustrates air projected onto said parisons. Said air projection **10** presses the parisons onto said mold. The molten thermoplastic is pressed onto the shell halves forming the mold to obtain the desired form of the thermoplastic liner. Said thermoplastic parisons pressed onto the shell halves forming the mold at least one open end **11.** Said at least one formed open end **11** will receive the boss subassembly.

Fig. **2D** illustrates the closing of the two shell halves forming the mold. Said closing provokes the compression of the thermoplastic parisons onto the boss subassembly. The boss subassembly comprises a compressing element having an outer surface in thermoplastic. Said outer surface in thermoplastic is preheated, as described in Fig. **2A****,** before being put into contact with the thermoplastic parisons forming the thermoplastic liner **7.** The thermoplastic material of the compressing element and the thermoplastic liner being in a molten phase are pressed one onto another during the closing of the mold. The molten thermoplastic of the compressing element pressed one onto another form a welded area where an autohesion phenomenon occurs.

Fig. **2E** illustrates the cooling of the assembly comprising a boss and a thermoplastic liner **7.** After forming said welding between the thermoplastics forming the liner **7** and the compressing element, said thermoplastics are cool down. The thermoplastics cooled down solidify. Said thermoplastics shrink during the cooling phase compressing the compressing element. Therefore, the compression constraint provided by the compressing element **4** onto the seal element is increased.

Fig. 2F illustrates a manufactured assembly **8** comprising a boss and a liner obtained by blow molding. Once the thermoplastic material forming the liner has solidified, the shell halves forming the mold are spread and the assembly **8** comprising a liner and the boss subassembly is manufactured.

The Fig. **1** and **2** disclose two particular molding steps to obtain an assembly **8** comprising a boss **1** and a thermoplastic liner **7.** Said assembly **8** can be realised by other molding methods.

Fig. **3** illustrates a sectional view of the compressing element **4.** Said compressing element **4** comprises an inner surface **13** and an outer surface **12.** Said outer surface **12** is made of a thermoplastic material. In a particular embodiment, the inner surface **13** and outer surface **12** are made of thermoplastic. The compressing element **4** is a one-piece compressing element **4** made of thermoplastic. In another embodiment, the inner surface **13** is made of a different material than the material of the outer surface **12.**

Fig. **4A** illustrates a view of a boss tubular shaped portion **14** and two seal elements **(31, 32).** In a preferential unclaimed embodiment, said two seal elements having the same or different material composition, preferably different material composition. In the particular embodiment, where at least two seal elements **31 and 32** are placed into at least two dedicated grooves of a boss tubular shaped portion **14,** several configurations involving at least one compressing element compressing said seal elements are possible.

Fig. **4B and 4C** illustrate two seal elements compressed by two compressing elements.

In the particular embodiment disclosed in Fig. **4B****,** said two compressing elements **40** are identical and provide the same compression force to the both seal elements **31** and **32** shown in **Fig. 4A****.**

In the particular embodiment disclosed in Fig. **4C****,** said two compressing elements **41** and **42** have a different material and/or stiffness. Said compressing elements **41** and **42** provide different compression force onto two seal elements. As disclosed previously in the invention, a boss tubular shaped portion **14** hosts commonly two seal elements where one seal element **32** is used to avoid a pressure leakage and the seal element **31** to lower the hydrogen permeation. Said seal elements **31 and 32** are made of different materials appropriated for each task. Said seal elements made of different materials require different compression constraints provided by the compressing elements **41** and **42.**Therfore the compressing elements **41** and **42** are different. In a particular embodiment, the compressing elements **41** and **42** are both made of different materials or have a different stiffness. Thus the compressing elements **41** and **42** provide different compression force to the seal elements. Said different compression force prevents gas pressure leakage with one seal element and reduce the permeation with the other seal element.

Fig. **4D** illustrates a compressing element **43** placed around the both seal elements **31** and **32,** shown in **Fig. 4A****.** Said compressing element **43** has an extended length compared to the compressing element shown in the previous figures covering two single seal elements. Said compressing element **43** having an extended length has a better contact surface with the boss tubular shaped portion. Mechanical tolerances are improved between the boss tubular shaped portion **14** and the compressing element **43** as the possible movement of the compressing **43** element due to oscillations are reduced.

Fig. **5** illustrates the compressing element **4** having fins **15** extending outwardly from the exterior surface **12** in a radial direction over the whole perimeter of said compressing element.

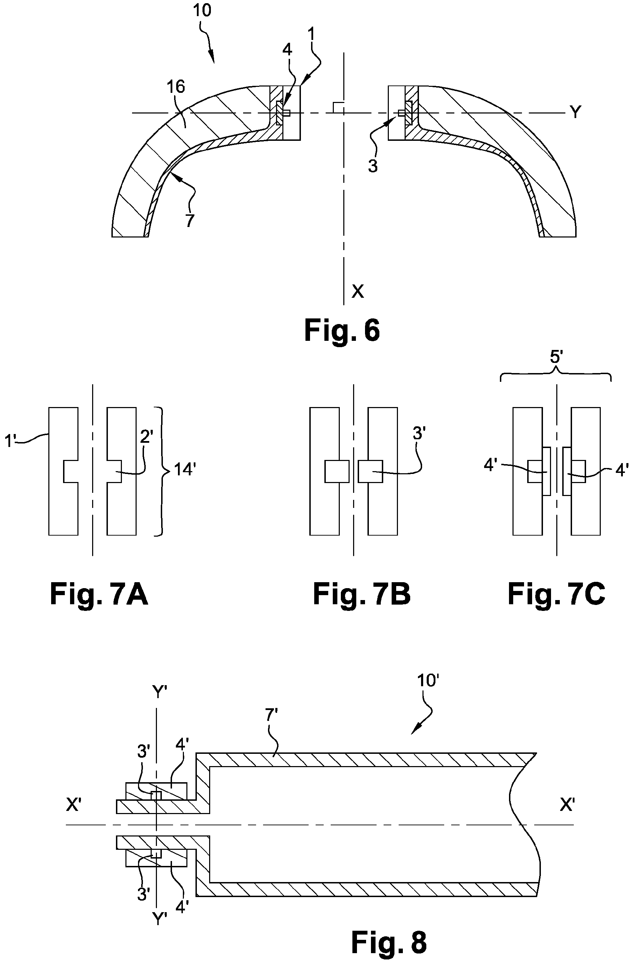

Fig. **6** illustrates a composite pressure vessel **10,** resulting from the unclaimed method described in relation with Fig. **1****.** The vessel **10** comprises the compressing element **4** melded with the liner **7** after cooling, and the seal element **3** compressed onto the boss **1** by the compressing element **4.** Furthermore, fibers **16** are placed around this end opening of the vessel pressure, wrapped around the vessel **10** and the boss **1.** The fibers **16** may be based on glass, on carbon, on a polymer (such as a polyamide, for example an aromatic polyamide such as an aramid), or may even be natural fibers such as hemp or sisal.

On this Fig. **6** are represented two axis: the main axis **X** of the boss **1,** which is the axis of rotation of the boss **1** and also of the whole vessel **10.** Starting from this axis **X,** a perpendicular axis **Y** is illustrated, passing by the fibers **16,** the liner **7,** the compressing element **4,** the seal element **3** and the boss **1.** Thus, according to this embodiment, the liner **7,** the compressing element **4,** the seal element **3** and the boss **1** are juxtaposed along axis **Y.** By "juxtaposed", we mean that no other element is placed between the mentioned components, which are firmly attached to each other.

Fig **7A, 7B** and **7C** illustrate respectively three steps of the claimed method to manufacture a composite pressure vessel **10'** comprising a boss **1',** according to another and claimed embodiment. The vessel **10'** resulting from this method is illustrated on Fig. **8****.** In this claimed embodiment, the difference in respect with Fig **1****.** is that the boss **1'** is placed on the liner **7'** but outside the liner **7'.** In other terms, the boss **1',** the seal element **3'** and the compressing element **4'** wrap the liner **7'.**

Here is described this method. Fig. **7A** illustrates a boss **1'.** In this particular embodiment, the boss **1'** comprises a tubular shaped portion **14'** hosting a fitting. In a preferred embodiment, said fitting is a valve (not shown in the figure). Said tubular shaped portion **14'** hosting a valve comprises at least one groove **2'** extending inwardly in a radial direction. The materials can be the same as those of boss **1.**

Fig. **7B** illustrates that a seal element **3'** is placed into said groove **2'.** Said seal element has the form of a ring to be fitted into the groove. The material of the seal element **3'** is preferably an elastomer and is preferably an O-ring, as for seal **3.** The seal element **3',** once fitted into the groove, has a width slightly larger the depth of the groove, such that the seal element **3'** slightly protrudes from the groove **2'** in a radial direction.

Fig. **7C** illustrates the fitting of a compressing element **4'** placed into the seal element **3'** in a tight manner. Such fitting is made by press fitting or manually. The compressing element **4'** is positioned inside the seal element in a tight manner such that the width of the seal element formerly protruding from the groove is compressed.

The diameter of the inner surface of the boss equals substantially the diameter of the outer surface of the compressing element **4',** with mechanical tolerances for said fitting as low as possible. The compressing element **4'** may comprise the same material as element **4.** The boss **1',** the seal element and the compressing element **4'** form a boss subassembly **5' .**

Like for the first method, molding the thermoplastic liner **7'** and attaching the boss subassembly **5'** to the thermoplastic liner **7'** takes place during said molding, and the compressing element **4'** is at least partially welded to the thermoplastic liner **7'** during said molding. All the manufacturing techniques described for the first method are applicable for this claimed method, such as overmolding, blow-molding, injection and rotomolding.

In Fig. **8****,** this assembly **5'** is illustrated within the vessel 10', which is similar to vessel 10, except for the features necessary to adapt it for the assembly 5'. This vessel 10' is thus the result of the claimed method of Fig 7, with the boss 1' wrapping the liner 1' via the seal compressing element 4' and the seal 3'.

## Claims

1. A method for manufacturing an assembly comprising a thermoplastic liner **(7'),** a boss **(1'),** a seal element **(3')** and a compressing element **(4'), characterised in that** the method comprises at least the steps of:
1) Forming a boss subassembly **(5')** by positioning the seal element into the boss and by securing the compressing element **(4')** inside said seal element **(3'),** such that the seal element **(3')** is compressed into the boss **(1')** (S01), said compressing element **(4')** being at least partially made of a thermoplastic material which is chemically compatible with the thermoplastic liner **(71);**
2) Placing the boss subassembly **(5')** in a mold **(6)** for molding the thermoplastic liner **(7'),** the boss subassembly **(5')** being on and outside the thermoplastic liner **(7'),** in such a way that the boss subassembly **(5')** wraps the liner **(7')** (S02);
3) Molding the thermoplastic liner **(7')** and attaching the boss subassembly **(5')** to the thermoplastic liner **(7')** during said molding (S03),
wherein the compressing element **(4')** is at least partially welded to the thermoplastic liner **(7')** during said molding.

2. The method according to claim 1, wherein the step of molding (S03) consists in plastic blow molding or injection molding.

3. The method according to claims 1 or 2, wherein the seal element **(3')** is an elastomer seal element.

4. The method according to any of the preceding claims, wherein the step of forming a boss subassembly comprises the positioning of two seal elements into the boss and securing the compressing element **(4')** inside said two seal elements **(3')** such that the two seal elements **(3')** are compressed into the boss.

5. The method according to claim 4, wherein the step of forming a boss subassembly comprises the positioning of two seal elements into the boss and securing two compressing elements **(4')** inside said two seal elements **(3')** such that the two seal elements **(3')** are compressed into the boss, the two compressing elements, respectively to the two seal elements **(3', 31, 32),** being similar **(4', 40).**

6. The method according to any of the preceding claims, wherein the compressing element **(4')** comprises a thermoplastic outer surface **(12).**

7. The method according to claim 6, wherein the compressing element **(4')** comprises at least two different materials.

8. The method according to claim 6, wherein the outer surface of the compressing element **(4', 12)** is entirely welded to said liner **(7').**

9. The method according to any one of the claims 6 to 8, wherein the thermoplastic outer surface of the compressing element **(12)** is preheated and brought into a quasi-solid state.

10. The method according to any one of the claims 7 to 9, wherein the outer surface of the compressing element **(12)** comprises at least one fin.

11. The method according to any of the preceding claims, wherein said seal element **(3')** is compressed by at least 20% in a radial direction.

12. The method according to any of the preceding claims, wherein said compressing element **(4')** material stiffness is higher than the stiffness of the thermoplastic liner **(7').**

13. A composite pressure vessel comprising:
- a thermoplastic liner **(7'),** a boss **(1'),** a seal element **(3')** positioned into the boss **(1')** and compressed into the boss **(1');**
- the pressure vessel further comprising a thermoplastic compressing element **(4')** secured inside the seal element **(3')** forming a boss subassembly **(5');**
- the boss subassembly **(5')** being on and outside the thermoplastic liner **(7')** such that the boss subassembly **(5')** wraps the liner **(7');** and
- the thermoplastic compressing element **(4')** being at least partially welded to the thermoplastic liner **(7').**

14. A composite pressure vessel according to claim 13, wherein the seal element **(3')** is an elastomer seal element.

15. A composite pressure vessel according to claim 13 or 14, wherein the seal element **(3')** is compressed by at least 20% in a radial direction.

16. A composite pressure vessel according to any one of claims 13 to 15, wherein a value of stiffness of a material of the compressing element **(4')** is higher than a value of stiffness of a material of the thermoplastic liner **(7').**

17. A composite pressure vessel according to any one of claims 13 to 16, wherein the compressing element **(4')** comprises at least two different materials.

18. A composite pressure vessel according to any one of claims 13 to 17, wherein the thermoplastic compressing element **(4')** comprises a thermoplastic outer surface **(12)** .

19. A composite pressure vessel according to claim 18, wherein the outer surface of the compressing element **(12)** comprises at least one fin.

20. A composite pressure vessel according to claim 18 or 19, wherein the outer surface consists in a portion opposite to a main axis **(X')** of the boss **(1')** and in a portion facing the main axis **(X'),** the portion facing the main axis being entirely welded to said liner **(7').**

21. A composite pressure vessel according to any one of claims 13 to 20, wherein, along an axis **(Y')** perpendicular to a main axis **(X')** of the boss **(1'),** are juxtaposed parts of the liner **(7'),** of the compressing element **(4'),** of the seal element **(3')** and of the boss **(1')**.

## Patentansprüche

1. Verfahren zur Herstellung einer Baugruppe, die eine thermoplastische Auskleidung (7'), einen Vorsprung (1'), ein Dichtungselement (3') und ein Kompressionselement (4') aufweist, **dadurch gekennzeichnet, dass** das Verfahren mindestens die folgenden Schritte umfasst:
1) Bilden einer Vorsprungsunterbaugruppe (5') durch Positionieren des Dichtungselements in dem Vorsprung und durch Befestigen des Kompressionselements (4') im Inneren des Dichtungselements (3'), so dass das Dichtungselement (3') in dem Vorsprung (1') komprimiert wird (S01), wobei das Kompressionselement (4') zumindest teilweise aus einem thermoplastischen Material hergestellt ist, das chemisch mit der thermoplastischen Auskleidung (7') kompatibel ist;
2) Anordnen der Vorsprungsunterbaugruppe (5') in einer Form (6) zum Formen der thermoplastischen Auskleidung (7'), wobei sich die Vorsprungsunterbaugruppe (5') auf und außerhalb der thermoplastischen Auskleidung (7') befindet, derart, dass die Vorsprungsunterbaugruppe (5') die Auskleidung (7') umhüllt (S02);
3) Formen der thermoplastischen Auskleidung (7') und Befestigen der Vorsprungsunterbaugruppe (5') an der thermoplastischen Auskleidung (7') während des Formens (S03), wobei das Kompressionselement (4') während des Formens zumindest teilweise mit der thermoplastischen Auskleidung (7') verschweißt wird.

2. Verfahren nach Anspruch 1, wobei der Schritt des Formens (S03) im Kunststoffblasformen oder Spritzgießen besteht.

3. Verfahren nach Anspruch 1 oder 2, wobei das Dichtelement (3') ein Elastomer-Dichtelement ist.

4. Verfahren nach einem der vorangehenden Ansprüche, wobei der Schritt des Bildens einer Vorsprungsunterbaugruppe das Positionieren von zwei Dichtungselementen in dem Vorsprung und das Befestigen des Kompressionselements (4') innerhalb der zwei Dichtungselemente (3') aufweist, so dass die zwei Dichtungselemente (3') in dem Vorsprung komprimiert werden.

5. Verfahren nach Anspruch 4, wobei der Schritt des Bildens einer Vorsprungsunterbaugruppe das Positionieren von zwei Dichtungselementen in dem Vorsprung und das Befestigen von zwei Kompressionselementen (4') innerhalb der zwei Dichtungselemente (3') umfasst, so dass die zwei Dichtungselemente (3') in dem Vorsprung komprimiert werden, wobei die zwei Kompressionselemente jeweils den beiden Dichtungselementen (3', 31, 32) ähnlich sind (4', 40).

6. Verfahren nach einem der vorhergehenden Ansprüche, wobei das Kompressionselement (4') eine thermoplastische Außenfläche (12) aufweist.

7. Verfahren nach Anspruch 6, wobei das Kompressionselement (4') aus mindestens zwei verschiedenen Materialien besteht.

8. Verfahren nach Anspruch 6, wobei die Außenfläche des Kompressionselements (4', 12) vollständig mit der Auskleidung (7') verschweißt ist.

9. Verfahren nach einem der Ansprüche 6 bis 8, wobei die thermoplastische Außenfläche des Kompressionselements (12) vorgewärmt und in einen quasi festen Zustand gebracht wird.

10. Verfahren nach einem der Ansprüche 7 bis 9, wobei die Außenfläche des Kompressionselements (12) mindestens eine Rippe aufweist.

11. Verfahren nach einem der vorhergehenden Ansprüche, wobei das Dichtungselement (3') in radialer Richtung um mindestens 20 % komprimiert wird.

12. Verfahren nach einem der vorhergehenden Ansprüche, wobei die Materialsteifigkeit des Kompressionselements (4') höher ist als die Steifigkeit der thermoplastischen Auskleidung (7').

13. Verbunddruckbehälter (7'), aufweisend:
- eine thermoplastische Auskleidung (7'), einen Vorsprung (1'), ein in dem Vorsprung (1') positioniertes und in dem Vorsprung (1') komprimiertes Dichtungselement (3');
- wobei der Druckbehälter ferner ein thermoplastisches Kompressionselement (4') aufweist, das im Inneren des Dichtungselements (3') befestigt ist und eine Vorsprungsunterbaugruppe (5') bildet;
- wobei die Vorsprungsunterbaugruppe (5') auf und außerhalb der thermoplastischen Auskleidung (7') liegt, sodass die Vorsprungsunterbaugruppe (5') die Auskleidung (7') umhüllt; und
- wobei das thermoplastische Kompressionselement (4') zumindest teilweise mit der thermoplastischen Auskleidung (7') verschweißt ist.

14. Verbunddruckbehälter nach Anspruch 13, wobei das Dichtungselement (3') ein Elastomer-Dichtelement ist.

15. Verbunddruckbehälter nach Anspruch 13 oder 14, wobei das Dichtungselement (3') in radialer Richtung um mindestens 20 % komprimiert ist.

16. Verbunddruckbehälter nach einem der Ansprüche 13 bis 15, wobei der Wert der Steifigkeit des Materials des Kompressionselements (4') höher ist als der Wert der Steifigkeit des Materials der thermoplastischen Auskleidung (7').

17. Verbunddruckbehälter nach einem der Ansprüche 13 bis 16, wobei das Kompressionselement (4') aus mindestens zwei verschiedenen Materialien besteht.

18. Verbunddruckbehälter nach einem der Ansprüche 13 bis 17, wobei das thermoplastische Kompressionselement (4') eine thermoplastische Außenfläche (12) aufweist.

19. Verbunddruckbehälter nach Anspruch 18, wobei die Außenfläche des Kompressionselements (12) mindestens eine Rippe aufweist.

20. Verbunddruckbehälter nach Anspruch 18 oder 19, bei dem die Außenfläche aus einem Abschnitt gegenüber einer Hauptachse (X') des Vorsprungs (1') und aus einem der Hauptachse (X') zugewandten Abschnitt besteht, wobei der der Hauptachse zugewandte Abschnitt vollständig mit der Auskleidung (7') verschweißt ist.

21. Verbunddruckbehälter nach einem der Ansprüche 13 bis 20, bei dem entlang einer Achse (Y'), die senkrecht zu einer Hauptachse (X') des Vorsprungs (1') verläuft, Teile der Auskleidung (7'), des Kompressionselements (4'), des Dichtungselements (3') und des Vorsprungs (1') nebeneinander angeordnet sind.

## Revendications

1. Procédé de fabrication d'un ensemble comprenant un revêtement interne thermoplastique (7'), un insert (1'), un élément d'étanchéité (3') et un élément de compression (4 '), **caractérisé en ce que** le procédé comprend au moins les étapes suivantes:
1) Formation d'un sous-ensemble d'insert (5') en positionnant l'élément d'étanchéité dans l'insert et en fixant l'élément de compression (4') à l'intérieur dudit élément d'étanchéité (3'), de telle sorte que l'élément d'étanchéité (3') est compressé dans l'insert (1') (S01), ledit élément de compression (4 ') étant au moins partiellement fait d'un matériau thermoplastique qui est chimiquement compatible avec le revêtement interne thermoplastique (7');
2) Placement du sous-ensemble d'insert (5') dans un moule (6) pour mouler le revêtement interne thermoplastique (7'), le sous-ensemble d'insert (5') étant sur et à l'extérieur du revêtement interne thermoplastique (7'), de telle sorte que le sous-ensemble d'insert (5') enveloppe le revêtement interne (7') (S02);
3) Moulage du revêtement interne thermoplastique (7') et fixation du sous-ensemble d'insert (5') au revêtement interne thermoplastique (7') lors dudit moulage (S03),
dans lequel l'élément de compression (4') est au moins partiellement soudé au revêtement interne thermoplastique (7') lors dudit moulage.

2. Procédé selon la revendication 1, dans lequel l'étape de moulage (S03) consiste en un moulage de plastique par soufflage ou un moulage par injection.

3. Procédé selon les revendications 1 ou 2, dans lequel l'élément d'étanchéité (3') est un élément d'étanchéité en élastomère.

4. Procédé selon l'une quelconque des revendications précédentes, dans lequel l'étape de formation d'un sous-ensemble d'insert comprend le positionnement de deux éléments d'étanchéité dans l'insert et la fixation de l'élément de compression (4') à l'intérieur desdits deux éléments d'étanchéité (3') de telle sorte que les deux éléments d'étanchéité (3') soient comprimés dans l'insert.

5. Procédé selon la revendication 4, dans lequel l'étape de formation d'un sous-ensemble d'insert comprend le positionnement de deux éléments d'étanchéité dans l'insert et la fixation de deux éléments de compression (4') à l'intérieur desdits deux éléments d'étanchéité (3') de telle sorte que les deux éléments d'étanchéité (3') sont compressés comprimés dans l'insert, les deux éléments de compression, respectivement aux deux éléments d'étanchéité (3', 31, 32), étant similaires (4', 40) .

6. Procédé selon l'une quelconque des revendications précédentes, dans lequel l'élément de compression (4') comprend une surface extérieure thermoplastique (12).

7. Procédé selon la revendication 6, dans lequel l'élément de compression (4') comprend au moins deux matériaux différents.

8. Procédé selon la revendication 6, dans lequel la surface extérieure de l'élément de compression (4', 12) est entièrement soudée audit revêtement interne (7').

9. Procédé selon l'un quelconque des revendications 6 à 8, dans lequel la surface extérieure thermoplastique de l'élément de compression (12) est préchauffée et amenée à un état quasi-solide.

10. Procédé selon l'un quelconque des revendications 7 à 9, dans lequel la surface extérieure de l'élément de compression (12) comprend au moins une ailette.

11. Procédé selon l'une quelconque des revendications précédentes, dans lequel ledit élément d'étanchéité (3') est compressé d'au moins 20% dans une direction radiale.

12. Procédé selon l'une quelconque des revendications précédentes, dans lequel la rigidité dudit matériau de l'élément de compression (4') est supérieure à la rigidité du revêtement interne thermoplastique (7').

13. Réservoir composite sous pression comprenant:
- un revêtement interne thermoplastique (7'), un insert (1'), un élément d'étanchéité (3') positionné dans l'insert (1') et compressé dans l'insert (1');
- le réservoir sous pression comprenant en outre un élément de compression thermoplastique (4') fixé à l'intérieur de l'élément d'étanchéité (3') formant un sous-ensemble d'insert (5');
- le sous-ensemble d'insert (5') étant sur et à l'extérieur du revêtement interne thermoplastique (7') de telle sorte que le sous-ensemble d'insert (5') enveloppe le revêtement interne (7'); et
- l'élément de compression thermoplastique (4') étant au moins partiellement soudé au revêtement interne thermoplastique (7').

14. Réservoir composite sous pression selon la revendication 13, dans lequel l'élément d'étanchéité (3') est un élément d'étanchéité en élastomère.

15. Réservoir composite sous pression selon la revendication 13 ou 14, dans lequel l'élément d'étanchéité (3') est compressé d'au moins 20% dans le sens radial.

16. Réservoir composite sous pression selon l'une quelconque des revendications 13 à 15, dans lequel une valeur de rigidité d'un matériau de l'élément de compression (4') est supérieure à une valeur de rigidité d'un matériau du revêtement interne thermoplastique (7').

17. Réservoir composite sous pression selon l'une quelconque des revendications 13 à 16, dans lequel l'élément de compression (4') comprend au moins deux matériaux différents.

18. Réservoir composite sous pression selon l'une quelconque des revendications 13 à 17, dans lequel l'élément de compression thermoplastique (4') comprend une surface extérieure thermoplastique (12).

19. Réservoir composite sous pression selon la revendication 18, dans lequel la surface extérieure de l'élément de compression (12) comprend au moins une ailette.

20. Réservoir composite sous pression selon la revendication 18 ou 19, dans lequel la surface extérieure consiste en une portion opposée à un axe principal (X') de l'insert (1') et en une portion faisant face à l'axe principal (X'), la portion faisant face à l'axe principal étant entièrement soudée audit revêtement interne (7 ').

21. Réservoir composite sous pression selon l'une quelconque des revendications 13 à 20, dans lequel, le long d'un axe (Y') perpendiculaire à un axe principal (X') de l'insert (1'), sont juxtaposées des parties du revêtement interne (7'), de l'élément de compression (4'), de l'élément d'étanchéité (3') et de l'insert (1').
